# EUROPÄISCHE PATENTSCHRIFT

(11) **EP 0 602 121 B1**
(45) Veröffentlichungstag und Bekanntmachung des Hinweises auf die Patenterteilung: **18.12.1996**
(21) Anmeldenummer: 92918612.0
(22) Anmeldetag: 02.09.1992
(51) Int. Cl.: F16F 9/46, B60G 17/08

(54) **STEUERBARE VENTILANORDNUNG FÜR REGELBARE ZWEIROHR-SCHWINGUNGSDÄMPFER**
CONTROLLABLE VALVE ARRANGEMENT FOR ADJUSTABLE DOUBLE-TUBE DASHPOTS
DISPOSITIF A SOUPAPE PILOTABLE POUR AMORTISSEURS DE VIBRATIONS BITUBES REGLABLES

(30) Priorität: 06.09.1991 DE 4129581
(43) Veröffentlichungstag der Anmeldung: 22.06.1994
(73) Patentinhaber: ITT Automotive Europe GmbH, 60488 Frankfurt (DE)
(72) Erfinder: FEIGEL, Hans-Jörg, D-6365 Rosbach v.d.H. 2 (DE)
(86) Internationale Anmeldenummer: EP9202022
(87) Internationale Veröffentlichungsnummer: WO9305315

(56) Entgegenhaltungen:
- EP-A- 0 399 326
- EP-A- 0 433 701
- WO-A-89/09891
- DE-C- 853 236
- GB-A- 751 164

## Beschreibung

Die Erfindung betrifft eine Ventilanordnung für einen regelbaren Zweirohr-Schwingungsdämpfer, mit einem Arbeitszylinder, dessen Innenraum mittels eines verschiebbaren Kolbens in eine erste sowie eine zweite Arbeitskammer unterteilt ist, sowie einem teilweise mit Öl gefüllten Ausgleichsraum, wobei die Ventilanordnung einen durch einen elektromechanischen Wandler betätigbaren, mittels einer Feder vorgespannten druckausgeglichenen Ventilkörper aufweist, der eine unidirektional durchströmte hydraulische Verbindung beeinflußt, die in der Zugstufe zwischen der ersten Arbeitskammer und der zweiten Arbeitskammer zusammen mit dem Ausgleichsraum und in der Druckstufe zwischen der ersten zusammen mit der zweiten Arbeitskammer und dem Ausgleichsraum besteht.

Eine derartige Ventilanordnung ist aus der EP-A-0 399 326 bekannt. Die Ventilanordnung des darin gezeigten Schwingungsdämpfers ist als ein einstufiges, druckausgeglichenes Schieberventil ausgebildet, wobei die Schieberposition in Abhängigkeit von dem Ansteuerstrom des elektromechanischen Wandlers bestimmt wird.

Weniger vorteilhaft ist bei der bekannten Ventilanordnung anzusehen, daß mit ihr lediglich eine Drosselfunktion realisierbar ist, die sich insbesondere im Bereich großer Volumenströme auf die Funktion des Schwingungsdämpfers negativ auswirkt.

Es ist daher Aufgabe der vorliegenden Erfindung eine Ventilanordnung der eingangs genannten Gattung anzugeben, die im Bereich kleiner Volumenströme die vorhin erwähnte Drosselfunktion und im Bereich großer Volumenströme eine Druckbegrenzungsfunktion erfüllt, die durch Änderungen der Bestromung des elektromechanischen Wandlers variiert werden kann, so daß die Schwingungsdämpferfunktion bzw. das Schwingungsdämpferverhalten bezüglich des gewünschten Federungskomforts verbessert werden.

Diese Aufgabe wird erfindungsgemäß dadurch gelöst, daß der Ventilkörper in einem ersten Volumenstrombereich eine von der Ansteuerung des elektromechanischen Wandlers abhängige Drosselfunktion erfüllt und zugleich mit einem zweiten druckunausgeglichenen Ventilkörper zusammenwirkt, der in einem zweiten Volumenstrombereich eine zweite unidirektional durchströmte zweite hydraulische Verbindung beeinflußt, die in der Zugstufe zwischen der ersten Arbeitskammer und der zweiten Arbeitskammer zusammen mit dem Ausgleichsraum und in der Druckstufe zwischen der zweiten Arbeitskammer zusammen mit der ersten Arbeitskammer und dem Ausgleichsraum besteht, indem der zweite Ventilkörper eine ebenfalls von der Ansteuerung des elektromechanischen Wandlers abhängige Druckbegrenzungsfunktion erfüllt.

Durch die erfindungsgemäßen Maßnahmen werden folgende Vorteile erreicht:

In dem für den Federungskomfort entscheidenden Bereich kleiner Dämpfergeschwindigkeiten und kleiner Dämpfungskräfte ist ein mit der erfindungsgemäßen Ventilanordnung ausgerüsteter Schwingungsdämpfer feiner dosierbar.

Bei Ausfall der Ansteuerung des elektromechanischen Wandlers bleibt der Dämpfer als passiver Dämpfer funktionsfähig. Durch geeignete konstruktive Maßnahmen kann eine der möglichen Kennlinien als die passive Kennlinie des Dämpfers bei Fehlen oder Ausfall der Ansteuerung voreingestellt werden.

Eine kennfeldgesteuerte Ventilanordnung ist im Gegensatz zu einer kraftgesteuerten tolerant gegen Fehlfunktionen der Ansteuerung, wie z.B. Signallaufzeiten oder Digitalisierungsfehler.

Durch eine geeignete Formgebung der Einzelkennlinien ist eine Änderung der Dämpferventilstellung nur bei einer Änderung der Anregungsverhältnisse (Fahrbahnwelligkeit oder Fahrsituation) notwendig; dagegen muß eine Kraft-Ansteuerung des Dämpfers auf jede Änderung der Dämpfergeschwindigkeit reagieren.

Eine vorteilhafte Weiterbildung der Erfindung besteht darin, daß der zweite Ventilkörper durch einen weiteren zweiten elektromechanischen Wandlers betätigbar ist. Dabei ist es besonders sinnvoll, wenn der zweite Ventilkörper als Teil des zweiten elektromechanischen Wandler, beispielsweise als Anker eines Elektromagneten oder als Spulenträger einer mit einem Permanentmagneten zusammenwirkenden Tauchspule, ausgebildet ist. Mit einer derartigen Anordnung sind beliebige Kennfelder realisierbar, da die Drossel- und die Druckbegrenzungsfunktion unabhängig voneinander eingestellt werden können. Deshalb ist die erfindungsgemäße Ventilanordnung für Testzwecke bestens geeignet.

Eine vorteilhafte Verknüpfung der Drossel- mit der Druckbegrenzungsfunktion bei der Verwendung nur eines elektromechanischen Wandlers wird bei einer anderen Weiterbildung des Erfindungsgegenstandes dadurch erreicht, daß der zweite Ventilkörper mittelbar über die Auslenkung des ersten Ventilkörpers von der Ansteuerung des elektromechanischen Wandlers beeinflußt wird.

Eine kompakt bauende Ausführung der erfindungsgemäßen Ventilanordnung, bei der der erste Ventilkörper als eine auf einem feststehenden zylindrischen Führungsteil verschiebbar geführte Hülse ausgebildet ist, besteht darin, daß die Hülse mit im Führungsteil ausgebildeten Strömungsquerschnitten zusammenwirkt, die vorzugsweise als Schlitze bzw. Ringnuten ausgebildet sind. Die zweite hydraulische Verbindung ist dabei durch eine im Führungsteil ausgebildete erste Bohrung, einen den zweiten Ventilkörper sowie die Feder aufnehmenden zylindrischen Raum, sowie eine in der Hülse koaxial zur ersten Bohrung ausgebildete zweite Bohrung gebildet.

Bei einer weiteren vorteilhaften Ausgestaltung der Erfindung ist vorgesehen, daß der zweite Ventilkörper als eine durch die Feder vorgespannte Kugel ausgeführt ist, die mit einem an einem Ende der ersten Bohrung ausgebildeten Dichtsitz zusammenwirkt. Eine derart ausgeführte erfindungsgemäße Ventilanordnung zeichnet sich durch eine einfache Bauweise aus und ermöglicht eine Realisierung einer einfach dimensionierbaren "Fühlfläche" am zweiten Ventilkörper.

Gemäß einer bevorzugten Ausführungsvariante der Erfindung ist die zweite hydraulische Verbindung durch im Führungsteil ausgebildete Strömungsquerschnitte, beispielsweise Schlitze, Bohrungen oder Ringnuten, gebildet, wobei der zweite Ventilkörper als eine auf bzw. in dem Führungsteil verschiebbar geführte zweite Hülse ausgeführt ist, die mit einem am Führungsteil ausgebildeten Dichtsitz zusammenwirkt, wobei der Dichtsitz durch eine am bzw. im Führungsteil ausgebildete Stufe größeren bzw. kleineren Durchmessers gebildet ist. Durch diese Maßnahmen wird eine bessere Aufspaltung der Volumenströme ermöglicht. Außerdem werden bei leichter Fertigbarkeit der Anordnung günstige Voraussetzungen für eine Strömungskraftkompensation geschaffen.

Für die einwandfreie Funktion der erfindungsgemäßen Ventilanordnung bzw. eines mit ihr ausgerüsteten Schwingungsdämpfers ist dabei besonders vorteilhaft, wenn beim Zusammenwirken des vorzugsweise als eine Hülse ausgebildeten ersten Ventilkörpers mit den Strömungsquerschnitten eine Kompensation von den im Wirkungsbereich auftretenden hydraulischen Kräften erfolgt. Diese Maßnahme ermöglicht außerdem eine Senkung des für den elektromechanischen Wandler erforderlichen Energiebedarfs.

Die vorhin erwähnte Kompensation der Strömungskräfte wird bei einer weiteren vorteilhaften Ausgestaltung der Erfindung beispielsweise dadurch erreicht, daß die Hülse und/oder der in Strömungsrichtung hinter den Strömungsquerschnitten befindliche Raum so ausgebildet sind, daß eine Umlenkung des Volumenstroms gewährleistet ist. Die mit den Strömungsquerschnitten zusammenwirkende Stirnfläche des hülsenförmig ausgeführten Ventilkörpers ist dabei vorzugsweise kegelstumpfförmig ausgebildet.

Eine andere Möglichkeit, den Strömungskräften entgegenzuwirken, besteht nach einem weiteren Erfindungsmerkmal darin, daß die Strömungsquerschnitte in einem hydraulischen Ringraum münden, der mit dem Ausgang der Ventilanordnung derart verbunden ist, daß der im Ringraum entstehende statische Druck eine hydraulische Kraftkomponente wirksam werden läßt, die den auf die Hülse wirkenden Bernoulli-Kräften entgegenwirkt.

Eine kostengünstige, raumsparende Bauweise der erfindungsgemäßen Ventilanordnung wird bei einer weiteren bevorzugten Ausführungsform dadurch erzielt, daß der erste Ventilkörper als Teil des elektromechanischen Wandlers ausgeführt ist. Der elektromechanische Wandler kann dabei entweder als eine mit einem Permanentmagneten zusammenwirkende Tauchspule, deren Spulenträger durch den ersten Ventilkörper gebildet ist, oder als ein Elektromagnet ausgebildet sein, dessen Anker durch den ersten Ventilkörper gebildet ist. Die erstgenannte konstruktive Variante weist ein günstigeres dynamisches Verhalten auf, während der bei der letztgenannten Lösung verwendete Elektromagnet eine robuste, störunanfällige Baugruppe darstellt.

Um zu gewährleisten, daß die Funktion des mit der erfindungsgemäßen Ventilanordnung ausgestatteten Schwingungsdämpfers auch bei einem Ausfall des elektromechanischen Wandlers weiterhin aufrechterhalten wird, (sog. Fail-Safe-Funktion), sehen weitere Ausgestaltungen des Erfindungsgegenstandes Mittel vor, die bei einem Ausfall des elektromechanischen Wandlers eine vorbestimmbare mittlere Drosselfunktion bzw. sowohl eine vorbestimmbare mittlere Drossel- als auch eine vorbestimmbare mittlere Druckbegrenzungsfunktion gewährleisten. So ist beispielsweise der erste Ventilkörper durch eine zweite Feder vorgespannt, die der ihn vorspannenden Feder entgegenwirkt. Dabei muß sichergestellt werden, daß die zweite hydraulische Verbindung bei einem Stromausfall geschlossen bleibt.

Eine weitere Möglichkeit, die erstgenannte Funktion zu erfüllen, besteht darin, daß die hydraulische Verbindung durch die Kraft der zweiten Feder geschlossen ist, wobei zwischen dem Eingang und dem Ausgang der Ventilanordnung eine dritte hydraulische Verbindung vorgesehen ist, die gleichzeitig vom ersten Ventilkörper freigegeben wird. Durch diese Maßnahme wird der Einsatz eines einfachen, unidirektional wirkenden elektromechanischen Wandlers ermöglicht.

Wird dagegen die zweitgenannte Funktion erfüllt, so wird die Funktionssicherheit der erfindungsgemäßen Ventilanordnung erhöht, da auch bei hohen Dämpfergeschwindigkeiten nur mittlere Kräfte auftreten.

Zur Realisierung des erwähnten erfinderischen Gedankens wird vorgeschlagen, daß die hydraulische Verbindung durch eine entgegengesetzt der Feder auf den ersten Ventilkörper wirkende dritte Feder teilweise geschlossen ist, wobei der elektromagnetische Wandler bidirektional wirksam ist.

Eine andere Möglichkeit, eine Fail-Safe-Funktion der oben erwähnten Art zu realisieren, besteht bei einer weiteren vorteilhaften Ausgestaltung darin, daß eine vierte Feder an einem durch einen dritten elektromechanischen Wandler betätigbaren Kraftübertragungselement abgestützt ist, das bei einem Abschalten bzw. Ausfall des dritten elektromechanischen Wandlers eine Übertragung der Kraft der vierten Feder auf den ersten Ventilkörper ermöglicht. Diese Maßnahme stellt ein Fail-Safe-Verfahren für unidirektional wirkende Wandler dar.

Um eine ausreichende, gleichmäßigere Spreizung des Kennlinienfeldes für kleine Volumenströme zu erreichen, sind bei weiteren bevorzugten Ausführungsvarianten Mittel vorgesehen, die eine nichtlineare Abhängigkeit des Öffnungsquerschnittes der Strömungsquerschnitte von der Auslenkung des ersten Ventilkörpers gewährleisten. So kann beispielsweise der erste Ventilkörper auf seiner Stirnfläche Kerben oder in seinem mit den Strömungsquerschnitten zusammenwirkenden Bereich Bohrungen aufweisen. Alternativ können auch die im Führungsteil vorgesehenen Strömungsquerschnitte als Bohrungen ausgebildet sein.

Um einem durch Verunreinigungen verursachten Klemmen der Ventilkörper vorzubeugen, wird bei einer vorteilhaften Weiterbildung des Erfindungsgegenstandes vorgeschlagen, daß den hydraulischen Verbindungen Filterelemente vorgeschaltet sind. Zur Konkretisierung dieses Gedankens wird beispielsweise vorgeschlagen, daß ein Filterelement im Führungsteil vor den Strömungsquerschnitten angeordnet ist.

Eine andere, vorteilhafte Ausführungsform der Erfindung sieht vor, daß der erste Ventilkörper Teil einer mit einem Regler zusammenwirkenden Wegsensoreinrichtung ist oder mit einer solchen gekoppelt ist. Durch die Vorgabe einer Sollposition erzeugt der Regler aus dem Vergleich mit der Istposition des ersten Ventilkörpers eine Stellgröße, die eine Kraft des elektromechanischen Wandlers bewirkt, die höher als die für die Sollposition erforderliche stationäre Kraft sein kann. Durch diese Maßnahme kann daher die Dynamik der erfindungsgemäßen Ventilanordnung erheblich erhöht werden.

Um den Kraftbedarf des elektromechanischen Wandlers auch weiter zu reduzieren, sieht schließlich eine andere Ausführungsvariante der erfindungsgemäßen Ventilanordnung vor, daß der erste Ventilkörper vorgesteuert ausgeführt ist. Diese Maßnahme verringert gleichzeitig die Anfälligkeit der Ventilanordnung gegen Verschmutzung.

Weitere Einzelheiten, Merkmale und Vorteile der Erfindung gehen aus der nachfolgenden Beschreibung von insgesamt sieben Ausführungsbeispielen unter Bezugnahme auf die beiliegende Zeichnung. Es zeigen:
- Fig. 1: einen mit der erfindungsgemäßen Ventilanordnung ausgerüsteten regelbaren Zweirohr-Schwingungsdämpfer in schematischer Schnittdarstellung;
- Fig. 2: ein mit der erfindungsgemäßen Ventilanordnung realisierbares Kennlinienfeld;
- Fig. 3 bis Fig. 7: eine erste bis siebte Ausführungsform der erfindungsgemäßen Ventilanordnung in der der Fig. 1 entsprechenden schematischen Schnittdarstellung in größerem Maßstab.

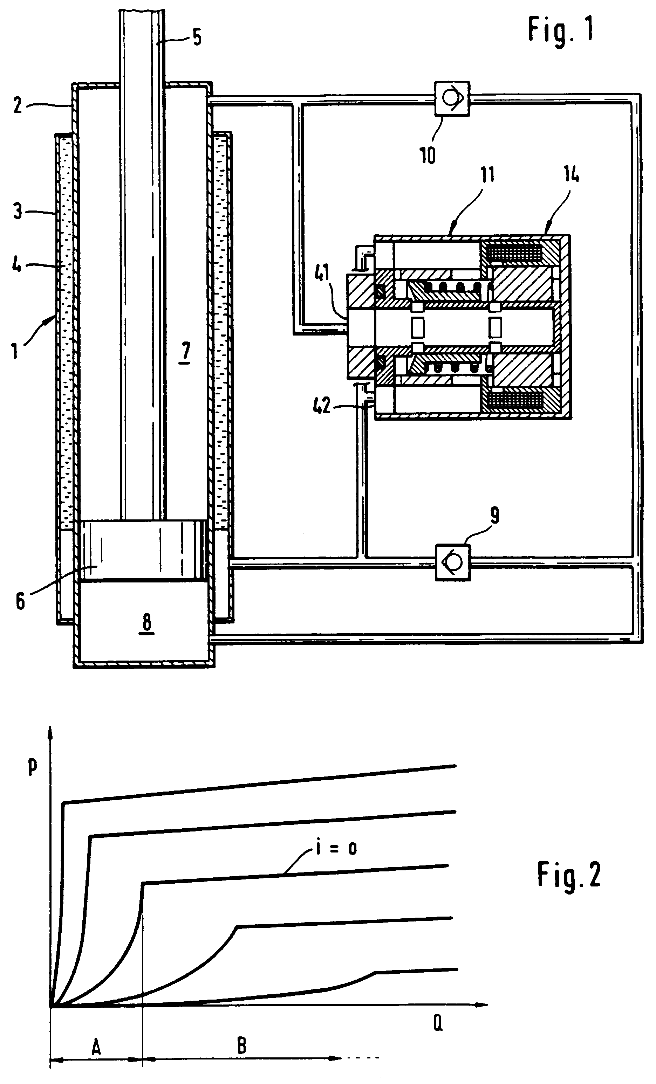

Der in Fig. 1 schematisch dargestellte regelbare Zweirohr-Schwingungsdämpfer 1 weist einen Arbeitszylinder 2 sowie ein zum Arbeitszylinder 2 koaxial angeordnetes Außenrohr 3 auf, so daß dazwischen ein teilweise mit Öl gefüllter Vorratsbehälter bzw. Ausgleichsraum 4 mit einem Kreisringquerschnitt gebildet wird. Der Innenraum des Arbeitszylinders 2 ist mittels eines durch eine Kolbenstange 5 verschiebbaren Kolbens 6 in eine oberhalb des Kolbens 6 ausgebildete erste Arbeitskammer 7 sowie eine unterhalb des Kolbens ausgebildete zweite Arbeitskammer 8 unterteilt.

Die erste Arbeitskammer 7 ist an einen Eingang 41 einer Ventilanordnung 11 angeschlossen, deren Ausgang 42 einerseits mit dem Ausgleichsraum 4 und andererseits über ein erstes Rückschlagventil 9 mit der zweiten Arbeitskammer 8 in Verbindung steht. Außerdem ist eine hydraulische Verbindung vorgesehen, die die zweite Arbeitskammer 8 über ein zweites Rückschlagventil 10 mit der ersten Arbeitskammer 7 verbindet. Dadurch wird gewährleistet, daß die zur Änderung des Durchflußquerschnittes zwischen der ersten Arbeitskammer 7 und der zweiten Arbeitskammer 8 bzw. dem Ausgleichsraum 4 (Zugstufe) und zwischen der zweiten Arbeitskammer 8 und dem Ausgleichsraum 4 (Druckstufe) dienende Ventilanordnung 11 bei Bewegungen des Kolbens 6 nur in einer Richtung durchströmt wird. Fig. 2 zeigt in diagrammatischer Darstellung das Kennlinienfeld des in Fig. 1 gezeigten Schwingungsdämpfers, d.h. die Abhängigkeit des im Schwingungsdämpfer herrschenden hydraulischen Druckes von dem durch die Ventilanordnung 11 fließenden Volumenstrom bei verschiedenen Werten des einen elektromechanischen Wandler 14 der steuerbaren Ventilanordnung 11 ansteuernden Erregerstromes.

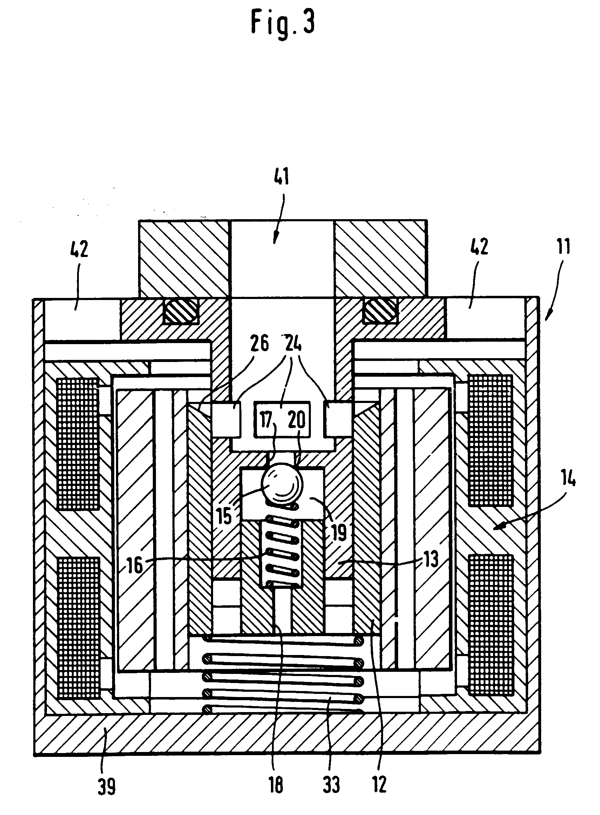

Die in Fig. 3 gezeigte erste Ausführungsform der erfindungsgemäßen Ventilanordnung 11 weist ein Ventilgehäuse 39 auf, das ein Strömungsquerschnitte 24 aufweisendes zylindrisches Führungsteil 13 aufnimmt, in dem ein als eine rohrförmige Hülse ausgebildeter, mit den Strömungsquerschnitten 24 zusammenwirkender erster Ventilkörper 12 verschiebbar geführt und mittels des vorhin erwähnten elektromechanischen Wandlers 14 verstellbar angeordnet ist. Der erste Ventilkörper 12 begrenzt im Inneren des Führungsteils 13 einen zylindrischen Raum 19, in dem eine unterhalb der Strömungsquerschnitte 24 im Führungsteil 13 vorgesehene Bohrung 17 sowie eine im Ventilkörper 12 ausgebildete Bohrung 18 münden. Am hinteren Ende der Bohrung 17 ist ein Dichtsitz 20 ausgebildet, mit dem ein durch eine sich am ersten Ventilkörper 12 abstützende Feder 16 vorgespannter zweiter Ventilkörper 15 zusammenwirkt, der im dargestellten Beispiel durch eine Kugel gebildet ist. Der den ersten Ventilkörper 12 verstellende elektromechanische Wandler 14 ist dabei durch einen Elektromagneten gebildet, dessen Anker den ersten Ventilkörper 12 umgreift. Außerdem ist zwischen dem ersten Ventilkörper 12 und dem Boden des Ventilgehäuses 39 eine der Feder 16 entgegenwirkende Druckfeder 33 eingespannt, deren Aufgabe im nachfolgenden Text näher erläutert wird.

Für die nachfolgende Beschreibung der Funktion der erfindungsgemäßen Ventilanordnung 11 wird zunächst angenommen, daß die Wicklungen des elektromagnetischen Wandlers 14 nicht bestromt sind (mittlere Kennlinie in Fig. 2) und daß die durch Schlitze bzw. Ringnuten gebildeten Strömungsquerschnitte 24 durch den ersten Ventilkörper 12 nicht verdeckt sind, so daß zwischen dem Eingang 41 und dem Ausgang 42 der Ventilanordnung eine hydraulische Verbindung besteht. Der durch eine geringe gleichmäßige Bewegung des Kolbens 6 entstehende kleine Volumenstrom (Volumenstrombereich A in Fig. 2), führt zu einer Erhöhung des Druckes, der durch den Öffnungsquerschnitt der Strömungsquerschnitte (24) bestimmt wird und der auf die dem Eingang 41 zugewandte Teilfläche des kugelförmig ausgebildeten zweiten Ventilkörpers 15 wirkt. Der im Führungsteil 13 ausgebildete Dichtsitz 20 wird durch die Kraft der Feder 16 sowie, wenn die Wicklungen des elektromagnetischen Wandlers 14 bestromt werden, durch die vom Wandler 14 aufgebrachte Stellkraft, vom zweiten Ventilkörper 15 so lange geschlossen gehalten, bis beispielsweise durch eine Zunahme des Volumenstroms, (Volumenstrombereich B in Fig. 2) der resultierende Druck auf die den zweiten Ventilkörper 15 wirkende Schließkraft überwindet. Das Öffnen des Dichtsitzes 20 bewirkt eine Bewegung des hülsenförmigen ersten Ventilkörpers 12 und demnach ein weiteres Öffnen der Schlitze 24, so daß eine weitere Zunahme des durch die Schlitze 24 fließenden Volumenstroms mit einer anschließenden Senkung des am Eingang 41 der Ventilanordnung 11 herrschenden Druckes stattfindet. Der beschriebene Vorgang dauert so lange, bis an den beiden Ventilkörpern 12, 15 wieder ein Kräftegleichgewichtszustand herrscht.

Dabei ist es vorteilhaft, wenn der mit den Strömungsquerschnitten (Schlitzen) 24 zusammenwirkende Bereich bzw. die Stirnfläche 26 des ersten Ventilkörpers 12 kegelstumpfförmig gestaltet ist. Dadurch erfährt der Volumenstrom beim Durchströmen der Schlitze 24 eine Umlenkung, die eine Impulswirkung zur Folge hat, die geeignet ist, die durch die Strömung verursachte, in der Schließrichtung der Strömungsquerschnitte wirkenden Kräfte (Bernoulli-Kräfte) zu kompensieren. Bei einer Änderung der durch den vorzugsweise bidirektional wirkenden elektromechanischen Wandler 14 erzeugten Kraft erfolgt eine Positionsänderung des druckausgeglichenen ersten Ventilkörpers 12 und damit zugleich eine Änderung der durch die Feder 16 aufgebrachten Schließkraft des zweiten Ventilkörpers 15.

Durch die Wirkung der am ersten Ventilkörper 12 abgestützten Druckfeder 33 werden die Strömungsquerschnitte 24 im unbestromten Zustand des Wandlers 14 teilweise geschlossen gehalten, so daß bei einem Ausfall des elektromechanischen Wandlers eine vorbestimmbare mittlere Drossel- als auch eine vorbestimmbare mittlere Druckbegrenzungsfunktion gewährleistet sind.

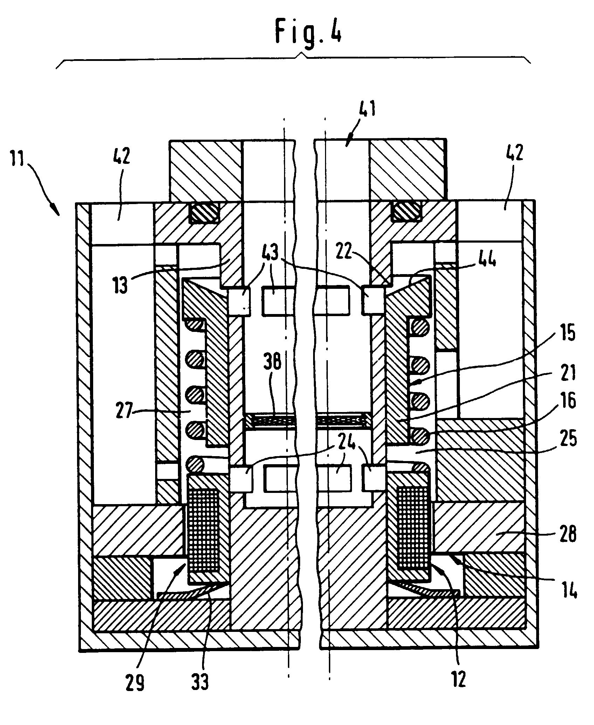

Bei der in Fig. 4 gezeigten zweiten Ausführung der erfindungsgemäßen Ventilanordnung 11 ist der elektromechanische Wandler 14 als eine mit einem Permanentmagneten 28 zusammenwirkende Tauchspule 29 ausgebildet, wobei der erste Ventilkörper 12 gleichzeitig als Spulenträger der erwähnten Tauchspule 29 dient. Der zweite Ventilkörper 15 wird durch eine auf dem Führungsteil 13 verschiebbar geführte rohrförmige Hülse 21 gebildet, die mit im Führungsteil 13 vorgesehenen Strömungsquerschnitten, beispielsweise Schlitzen 43, sowie mit einem am Führungsteil 13 ausgebildeten Dichtsitz 22 zusammenwirkt. Aus strömungstechnischen Gründen ist es dabei vorteilhaft, wenn die Stirnfläche 44 der Hülse 21 kegelstumpfförmig ausgebildet ist. Um die funktionswichtigen Bereiche der Strömungsquerschnitte 23,43 vor Verunreinigungen zu schützen, sind Filterelemente vorgesehen. Ein den Strömungsquerschnitten 24 vorgeschaltetes Filterelement ist in Fig. 4 gezeigt und trägt das Bezugszeichen 38.

Um die beim Zusammenwirken des ersten Ventilkörpers 12 mit den Strömungsquerschnitten 24 auftretenden hydraulischen Kräfte zu kompensieren, ist der in Strömungsrichtung hinter den Strömungsquerschnitten 24 ausgebildete Raum 25 vorzugsweise derart gestaltet, daß eine Umlenkung des Volumenstroms gewährleistet ist. Eine derartige Lösung ist in der rechten Hälfte der Fig. 4 angedeutet. Bei der in der linken Hälfte der Fig. 4 gezeigten Ausführungsvariante münden die Strömungsquerschnitte 24 in einem Ringraum 27, der mit dem Ausgang 42 der Ventilanordnung 11 derart verbunden ist, daß der im Ringraum 27 entstehende statische Druck eine hydraulische Kraftkomponente hervorruft, die den auf den ersten Ventilkörper 12 einwirkenden Bernoulli-Kräfte entgegenwirkt.

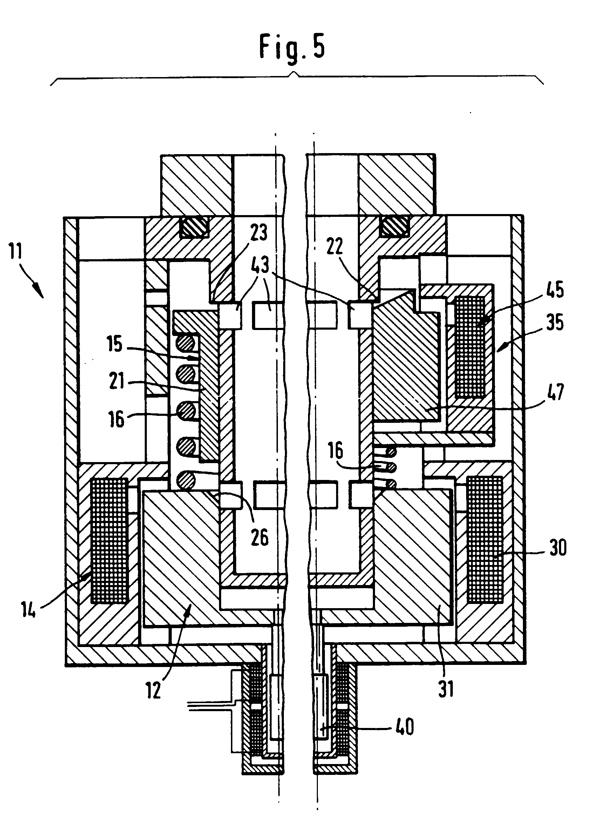

Bei der in Fig. 5 gezeigten Ausführungsvariante ist der elektromechanische Wandler 14 als ein Elektromagnet 30 ausgebildet, dessen Anker 31 den ersten Ventilkörper 12 bildet. Der auf dem Führungsteil 13 geführte hülsenförmig gestaltete zweite Ventilkörper 15 bzw. 21 wirkt dabei mit einer im Bereich der Strömungsquerschnitte 43 ausgebildeten, den Dichtsitz 22 bildenden radialen Stufe 23 größeren Durchmessers zusammen, wie der linken Hälfte der Abbildung zu entnehmen ist. Alternativ kommt jedoch auch eine in der rechten Hälfte der Abbildung gezeigte Anordnung in Frage, bei der der zweite Ventilkörper 15 als Anker 47 eines vorzugsweise als Elektromagnet 45 ausgeführten zweiten elektromechanischen Wandlers 35 ausgebildet ist. Die der ersten Ventilkörper 12 bzw. 31 vorspannende Feder 16 stützt sich bei dieser Ausführung an einem näher nicht bezeichneten Träger des zweiten elektromechanischen Wandlers 35 ab. Der erste Ventilkörper 12 kann als Teil einer mit einem nicht gezeigten Regler zusammenwirkenden Wegsensoreinrichtung 40 ausgebildet oder mit einer solchen gekoppelt sein.

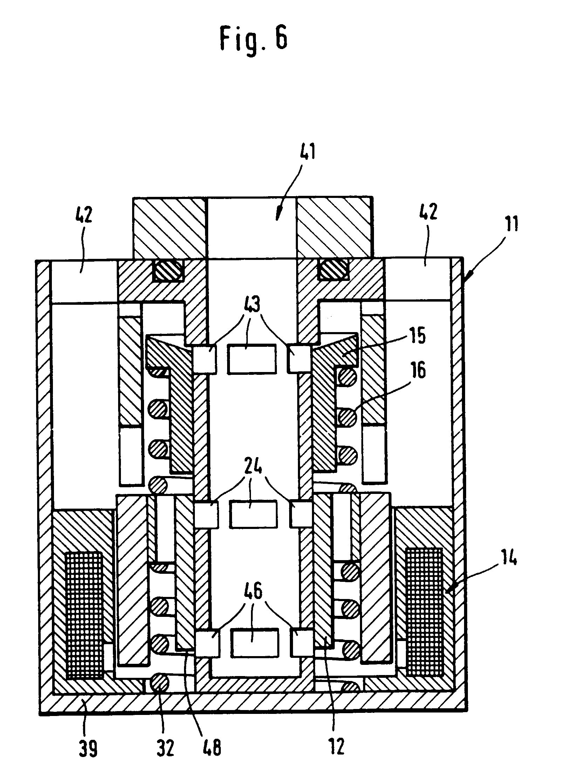

Bei der in Fig. 6 gezeigten sechsten Ausführungsform der erfindungsgemäßen Ventilanordnung 11 ist zwischen dem ersten Ventilkörper 12 und dem Boden des Ventilgehäuses 39 eine zweite Feder 32 vorgesehen, die der zwischen den beiden Ventilkörpern 12,15 angeordneten Feder 16 entgegenwirkt und deren Kraft so bemessen ist, daß die Strömungsquerschnitte 24 vom ersten Ventilkörper 12 verdeckt sind. Gleichzeitig weist das Führungsteil 13 in seinem unteren Bereich weitere Strömungsquerschnitte 46 auf, die mit einer am ersten Ventilkörper 12 ausgebildeten Steuerkante 48 zusammenwirken und die eine dritte Verbindung zwischen dem Eingang 41 und dem Ausgang 42 ermöglichen. Die dritte Verbindung wird bei einem Ausfall des elektromechanischen Wandlers 14 freigegeben, so daß eine vorbestimmbare mittlere Drosselfunktion gewährleistet ist.

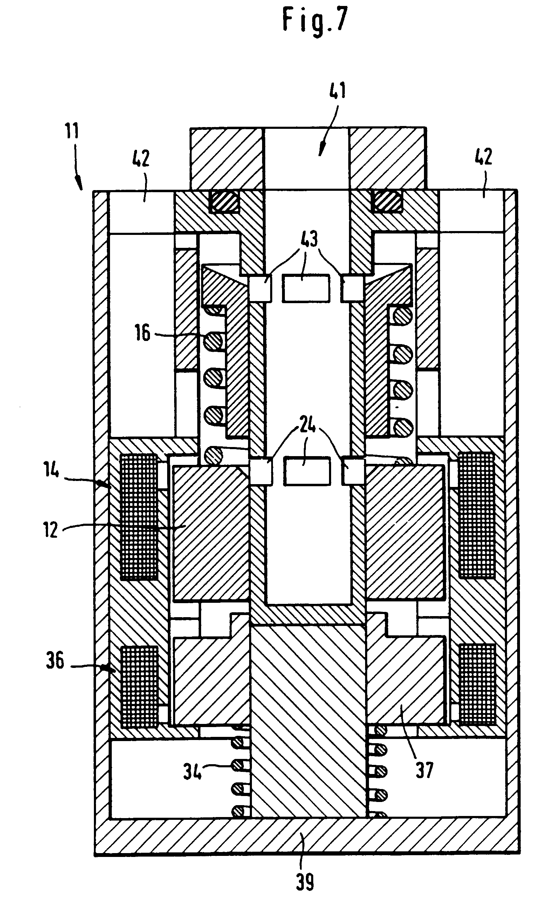

Eine andere Möglichkeit, sowohl eine vorbestimmbare mittlere Drossel- als auch eine vorbestimmbare mittlere Druckbegrenzungsfunktion bei einem Ausfall des elektromechanischen Wandlers 14 zu gewährleisten, wird schließlich im Zusammenhang mit der in Fig. 7 dargestellten siebten Ausführung der erfindungsgemäßen Ventilanordnung 11 gezeigt. Diese Ausführungsform weist eine sich am Boden des Ventilgehäuses 39 abstützende vierte Feder 34 auf, die ein Kraftübertragungselement 37 vorspannt, das beispielsweise durch einen dritten elektromechanischen bzw. elektromagnetischen Wandler 36 betätigbar ist. Bei der Betätigung des vorzugsweise mit dem ersten Wandler 14 elektrisch gekoppelten dritten Wandlers 36 wird das Kraftübertragungselement 37 in einem Abstand vom ersten Ventilkörper 12 gehalten, während bei einem Stromausfall das Kraftübertragungselement 37 freigegeben wird, so daß eine Übertragung der von der Feder 34 aufgebrachten Kraft auf den ersten Ventilkörper 12 stattfindet. Durch das Zusammenwirken der beiden Federn 16,34 wird eine definierte mittlere Position des Ventilkörpers 12 erreicht, die den oben erwähnten gewünschten Effekt bringt.

Im Rahmen des erfinderischen Gedankens erscheint auch sinnvoll, Mittel vorzusehen, die eine nichtlineare Abhängigkeit des durch die Strömungsquerschnitte 24 definierten Öffnungsquerschnitts von der Auslenkung des ersten Ventilkörpers 12 gewährleiten. So kann beispielsweise der Ventilkörper 12 auf seiner Stirnfläche Kerben oder in seinem mit den Strömungsquerschnitten 24 zusammenwirkenden Bereich Bohrungen aufweisen. Eine andere Möglichkeit besteht darin, die Strömungsquerschnitte 24 im Führungsteil 13 als Bohrungen auszubilden. Denkbar sind selbstverständlich auch Ausführungen, bei denen der erste Ventilkörper 12 durch eine Vorstufe betätigbar ist.

### Bezugszeichenliste

- 1: Zweirohr-Schwingungsdämpfer
- 2: Arbeitszylinder
- 3: Außenrohr
- 4: Ausgleichsraum
- 5: Kolbenstange
- 6: Kolben
- 7: Arbeitskammer
- 8: Arbeitskammer
- 9: Rückschlagventil
- 10: Rückschlagventil
- 11: Ventilanordnung
- 12: Ventilkörper
- 13: Führungsteil
- 14: Wandler
- 15: Ventilkörper
- 16: Feder
- 17: Bohrung
- 18: Bohrung
- 19: Raum
- 20: Dichtsitz
- 21: Hülse
- 22: Dichtsitz
- 23: Stufe
- 24: Strömungsquerschnitt, Schlitz
- 25: Raum
- 26: Stirnfläche
- 27: Ringraum
- 28: Permanentmagnet
- 29: Tauchspule
- 30: Elektromagnet
- 31: Anker
- 32: Feder
- 33: Feder
- 34: Feder
- 35: Wandler
- 36: Wandler
- 37: Kraftübertragungselement
- 38: Filterelement
- 39: Ventilgehäuse
- 40: Wegsensor
- 41: Eingang
- 42: Ausgang
- 43: Strömungsquerschnitt
- 44: Stirnfläche
- 45: Elektromagnet
- 46: Strömungsquerschnitt
- 47: Anker
- 48: Steuerkante

## Patentansprüche

1. Steuerbare Ventilanordnung (11) für einen regelbaren Zweirohr-Schwingungsdämpfer, mit einem Arbeitszylinder (2), dessen Innenraum mittels eines verschiebbaren Kolbens (6) in eine erste (7) sowie eine zweite Arbeitskammer (8) unterteilt ist, sowie einem teilweise mit Öl gefüllten Ausgleichsraum (4), wobei die Ventilanordnung (11) einen durch einen elektromechanischen Wandler (14) betätigbaren, mittels einer Feder (16) vorgespannten druckausgeglichenen Ventilkörper (12) aufweist, der eine unidirektional durchströmte hydraulische Verbindung beeinflußt, die in der Zugstufe zwischen der ersten Arbeitskammer (7) und der zweiten Arbeitskammer (8) zusammen mit dem Ausgleichsraum (4) und in der Druckstufe zwischen der ersten (7) zusammen mit der zweiten Arbeitskammer (8) und dem Ausgleichsraum (4) besteht, dadurch **gekennzeichnet,** daß der Ventilkörper (12) in einem ersten Volumenstrombereich (A) eine von der Ansteuerung des elektromechanischen Wandlers (14) abhängige Drosselfunktion erfüllt und zugleich mit einem zweiten druckunausgeglichenen Ventilkörper (15) zusammenwirkt, der in einem zweiten Volumenstrombereich (B) eine zweite unidirektional durchströmte hydraulische Verbindung beeinflußt, die in der Zugstufe zwischen der ersten Arbeitskammer (7) und der zweiten Arbeitskammer (8) zusammen mit dem Ausgleichsraum (4) und in der Druckstufe zwischen der zweiten Arbeitskammer (8) zusammen mit der ersten Arbeitskammer (7) und dem Ausgleichsraum (4) besteht, indem der zweite Ventilkörper (15) eine ebenfalls von der Ansteuerung des elektromechanischen Wandlers (14) abhängige Druckbegrenzungsfunktion erfüllt.

2. Ventilanordnung nach Anspruch 1, dadurch **gekennzeichnet,** daß der erste Ventilkörper (12) als Teil des elektromechanischen Wandlers (14) ausgeführt ist.

3. Ventilanordnung nach Anspruch 1, dadurch **gekennzeichnet,** daß der zweite Ventilkörper (15) durch einen weiteren zweiten elektromechanischen Wandler (35) betätigbar ist.

4. Ventilanordnung nach Anspruch 3, dadurch **gekennzeichnet,** daß der zweite Ventilkörper (15) als Teil des zweiten elektromechanischen Wandlers (35) ausgeführt ist.

5. Ventilanordnung nach Anspruch 1, dadurch **gekennzeichnet,** daß der zweite Ventilkörper (15) mittelbar über die Auslenkung des ersten Ventilkörpers (12) von der Ansteuerung des elektromechanischen Wandlers (14) beeinflußt wird.

6. Ventilanordnung nach Anspruch 1, dadurch **gekennzeichnet,** daß der erste Ventilkörper (12) mittels der Feder (16) mit dem zweiten, druckunausgeglichenen Ventilkörper (15) gekoppelt ist.

7. Ventilanordnung nach Anspruch 1, wobei der erste Ventilkörper als eine Hülse ausgebildet ist, die auf einem feststehenden Führungsteil verschiebbar geführt ist, dadurch **gekennzeichnet,** daß die Hülse (12) mit im Führungsteil (13) ausgebildeten Strömungsquerschnitten (24) zusammenwirkt.

8. Ventilanordnung nach Anspruch 7, dadurch **gekennzeichnet,** daß die Strömungsquerschnitte (24) als Schlitze bzw. Ringnuten ausgebildet sind.

9. Ventilanordnung nach Oberbegriff des Anspruches 7, dadurch **gekennzeichnet,** daß die zweite hydraulische Verbindung durch eine im Führungsteil (13) ausgebildete erste Bohrung (17), einen den zweiten Ventilkörper (15) sowie die Feder (16) aufnehmenden zylindrischen Raum (19), sowie eine in der Hülse (12) koaxial zur ersten Bohrung (17) ausgebildete zweite Bohrung (18) gebildet ist.

10. Ventilanordnung nach Anspruch 9, dadurch **gekennzeichnet,** daß der zweite Ventilkörper (15) als eine durch die Feder (16) vorgespannte Kugel ausgeführt ist, die mit einem an einem Ende der ersten Bohrung (17) ausgebildeten Dichtsitz (20) zusammenwirkt.

11. Ventilanordnung nach Anspruch 1, dadurch **gekennzeichnet,** daß die zweite hydraulische Verbindung durch im Führungsteil (13) ausgebildete Strömungsquerschnitte (43), beispielsweise Schlitze oder Ringnuten gebildet ist, wobei der zweite Ventilkörper (15) als eine auf bzw. in dem Führungsteil (13) verschiebbar geführte zweite Hülse (21) ausgeführt ist, die mit einem am bzw. im Führungsteil (13) ausgebildeten Dichtsitz (22) zusammenwirkt.

12. Ventilanordnung nach Anspruch 11, dadurch **gekennzeichnet,** daß der Dichtsitz (22) durch eine am bzw. im Führungsteil (13) ausgebildete Stufe (23) größeren bzw. kleineren Durchmessers gebildet ist.

13. Ventilanordnung nach Anspruch 9 oder 10, dadurch **gekennzeichnet,** daß beim Zusammenwirken von Hülse (12) und Strömungsquerschnitten (24) eine Kompensation von den im Wirkungsbereich auftretenden hydraulischen Kräften erfolgt.

14. Ventilanordnung nach Anspruch 13, dadurch **gekennzeichnet,** daß die Hülse (12) und/oder der in Strömungsrichtung hinter den Strömungsquerschnitten (24) befindliche Raum (25) so ausgebildet sind, daß eine Umlenkung des Volumenstroms gewährleistet ist.

15. Ventilanordnung nach Anspruch 14, dadurch **gekennzeichnet,** daß die mit den Strömungsquerschnitten (24) zusammenwirkende Stirnfläche (26) der Hülse (12) kegelstumpfförmig ausgebildet ist.

16. Ventilanordnung nach Anspruch 13, dadurch **gekennzeichnet,** daß die Strömungsquerschnitte (24) in einem hydraulischen Ringraum (27) münden, der mit dem Ausgang (42) der Ventilanordnung (11) derart verbunden ist, daß der im Ringraum (27) entstehende statische Druck eine hydraulische Kraftkomponente wirksam werden läßt, die den auf die Hülse (12) wirkenden Bernoulli-Kräften entgegenwirkt.

17. Ventilanordnung nach Anspruch 2, dadurch **gekennzeichnet,** daß der elektromechanische Wandler (14) als eine mit einem Permanentmagneten (28) zusammenwirkende Tauchspule (29) ausgebildet ist, deren Spulenträger durch den ersten Ventilkörper (12) gebildet ist.

18. Ventilanordnung nach Anspruch 2, dadurch **gekennzeichnet,** daß der elektromechanische Wandler (14) als ein Elektromagnet (30) ausgebildet ist, dessen Anker (31) durch den ersten Ventilkörper (12) gebildet ist.

19. Ventilanordnung nach Anspruch 5, dadurch **gekennzeichnet,** daß Mittel (32) vorgesehen sind, die bei einem Ausfall des elektromechanischen Wandlers (14) eine vorbestimmbare mittlere Drosselfunktion gewährleisten.

20. Ventilanordnung nach Anspruch 19, dadurch **gekennzeichnet,** daß der erste Ventilkörper (12) durch eine zweite Feder (32) vorgespannt ist, die der Feder (16) entgegenwirkt.

21. Ventilanordnung nach Anspruch 19 oder 20, dadurch **gekennzeichnet,** daß die hydraulische Verbindung durch die Kraft der zweiten Feder (32) geschlossen ist, wobei zwischen dem Eingang (41) und dem Ausgang (42) der Ventilanordnung (11) eine dritte hydraulische Verbindung vorgesehen ist, die gleichzeitig vom ersten Ventilkörper (12) freigegeben wird.

22. Ventilanordnung nach Anspruch 5, dadurch **gekennzeichnet,** daß Mittel vorgesehen sind, die bei einem Ausfall des elektromechanischen Wandlers (14) sowohl eine vorbestimmbare mittlere Drossel-, als auch eine vorbestimmbare mittlere Druckbegrenzungsfunktion gewährleisten.

23. Ventilanordnung nach Anspruch 22, dadurch **gekennzeichnet,** daß die hydraulische Verbindung durch eine entgegengesetzt der Feder (16) auf den ersten Ventilkörper (12) wirkende dritte Feder (33) teilweise geschlossen ist, wobei der elektromagnetische Wandler (14) bidirektional wirksam ist.

24. Ventilanordnung nach Anspruch 23, dadurch **gekennzeichnet,** daß eine vierte Feder (34) an einem durch einen dritten elektromechanischen Wandler (36) betätigbaren Kraftübertragungselement (37) abgestützt ist, das bei einem Abschalten bzw. Ausfall des dritten elektromechanischen Wandlers (36) eine Übertragung der Kraft der vierten Feder (34) auf den ersten Ventilkörper (12) ermöglicht.

25. Ventilanordnung nach einem der vorhergehenden Ansprüche, dadurch **gekennzeichnet,** daß Mittel vorgesehen sind, die eine nichtlineare Abhängigkeit des Öffnungsquerschnittes der Strömungsquerschnitte (24) von der Auslenkung des ersten Ventilkörpers (12) gewährleisten.

26. Ventilanordnung nach Anspruch 25, dadurch **gekennzeichnet,** daß die Stirnfläche des ersten Ventilkörpers (12) Kerben aufweist.

27. Ventilanordnung nach Anspruch 25, dadurch **gekennzeichnet,** daß der erste Ventilkörper (12) in seinem mit den Strömungsquerschnitten (24) zusammenwirkenden Bereich Bohrungen aufweist.

28. Ventilanordnung nach Anspruch 25, dadurch **gekennzeichnet,** daß die Strömungsquerschnitte (24) im Führungsteil (13) als Bohrungen ausgebildet sind.

29. Ventilanordnung nach einem der vorhergehenden Ansprüche, dadurch **gekennzeichnet,** daß den hydraulischen Verbindungen Filterelemente vorgeschaltet sind.

30. Ventilanordnung nach Anspruch 11 und 29, dadurch **gekennzeichnet,** daß im Führungsteil (13) vor den Strömungsquerschnitten (24) ein Filterelement (38) angeordnet ist.

31. Ventilanordnung nach Anspruch 1, dadurch **gekennzeichnet,** daß der erste Ventilkörper (12) Teil einer mit einem Regler zusammenwirkenden Wegsensoreinrichtung (40) ist oder mit einer solchen gekoppelt ist.

32. Ventilanordnung nach Anspruch 1, dadurch **gekennzeichnet,** daß der erste Ventilkörper (12) vorgesteuert ist.

## Claims

1. A controllable valve arrangement (11) for a controllable two-tube vibration absorber, including a power cylinder (2) having its interior space subdivided into a first (7) and a second power chamber (8) by a slidable piston (6), and a balancing chamber (4) partly filled with oil, wherein the valve arrangement (11) includes a pressure-balanced valve body (12) which is actuatable by an electromechanical transducer (14) and prestressed by a spring (16), the valve body influencing a hydraulic connection through which a unidirectional flow is passed and which, in the traction stage, is established between the first power chamber (7) and the second power chamber (8) jointly with the balancing chamber (4), and, in the thrust stage, is established between the first power chamber (7) jointly with the second power chamber (8) and the balancing chamber (4),
**characterized** in that the valve body (12), in a first range of volumetric flow rate (A), performs a restricting function in response to the actuation of the electromechanical transducer (14) and, simultaneously, interacts with a second, pressure-unbalanced valve body (15) which, in a second range of volumetric flow rate (B), influences a second hydraulic connection through which a unidirectional flow is passed and which, in the traction stage, is established between the first power chamber (7) and the second power chamber (8) jointly with the balancing chamber (4), and, in the thrust stage, is established between the second power chamber (8) jointly with the first power chamber (7) and the balancing chamber (4), the second valve body (15) performing a pressure-limiting function which also depends on the actuation of the electromechanical transducer (14).

2. A valve arrangement as claimed in claim 1,
**characterized** in that the first valve body (12) is designed as a part of the electromechanical transducer (14).

3. A valve arrangement as claimed in claim 1,
**characterized** in that the second valve body (15) is actuatable by a second electromechanical transducer (35).

4. A valve arrangement as claimed in claim 3,
**characterized** in that the second valve body (15) is designed as a part of the second electromechanical transducer (35).

5. A valve arrangement as claimed in claim 1,
**characterized** in that the second valve body (15) is influenced indirectly through the excursion of the first valve body (12) by the actuation of the electromechanical transducer (14).

6. A valve arrangement as claimed in claim 1,
**characterized** in that the first valve body (12) is coupled to the second, pressure-unbalanced valve body (15) by means of the spring (16).

7. A valve arrangement as claimed in claim 1, wherein the first valve body has the shape of a bushing which is slidingly guided on a stationary guide element,
**characterized** in that the bushing (12) interacts with cross-sectional areas of flow (24) which are formed in the guide element (13).

8. A valve arrangement as claimed in claim 7,
**characterized** in that the cross-sectional areas of flow (24) are configured in the shape of slots, for example, as annular grooves.

9. A valve arrangement as claimed in the preamble of claim 7, **characterized** in that the second hydraulic connection is provided by a first bore (17) which is formed in the guide element (13), a cylindrical chamber (19) which accommodates the second valve body (15) and the spring (16), and a second bore (18) which is formed in the bushing (12) coaxially with the first bore (17).

10. A valve arrangement as claimed in claim 9,
**characterized** in that the second valve body (15) is designed as a ball which is prestressed by the spring (16) and interacts with a sealing seat (20) configured at one end of the first bore (17).

11. A valve arrangement as claimed in claim 1,
**characterized** in that the second hydraulic connection is formed by cross-sectional areas of flow (43), for example, by slots or annular grooves, which are configured in the guide element (13), the second valve body (15) being designed as a bushing (21) which is slidingly guided on or in the guide element (13) and interacts with a sealing seat (22) formed on or in the guide element (13).

12. A valve arrangement as claimed in claim 11,
**characterized** in that the sealing seat (22) is formed by a step (23) of larger, respectively smaller diameter which is configured on or in the guide element (13).

13. A valve arrangement as claimed in claim 9 or claim 10,
**characterized** in that a compensation of the hydraulic forces occurs in the effective range during the interaction of the bushing (12) and the cross-sectional areas of flow (24).

14. A valve arrangement as claimed in claim 13,
**characterized** in that the bushing (12) and/or the chamber (25) are configured such that a deviation of the volumetric flow is safeguarded, the chamber being positioned downstream of the cross-sectional areas of flow (24) as seen in the flow direction.

15. A valve arrangement as claimed in claim 14,
**characterized** in that the front surface (26) of the bushing (12) has a truncated cone shape, the front surface interacting with the cross-sectional areas of flow (24).

16. A valve arrangement as claimed in claim 13,
**characterized** in that the cross-sectional areas of flow (24) end up in an annular hydraulic chamber (27) which is connected to the outlet (42) of the valve arrangement (11) such that the static pressure resulting within the annular chamber (27) effectively induces a hydraulic force component which counteracts the Bernoulli's forces acting on the bushing (12).

17. A valve arrangement as claimed in claim 2,
**characterized** in that the electromechanical transducer (14) is configured as a plunger coil (29) which interacts with a permanent magnet (28) and whose coil support is formed by the first valve body (12).

18. A valve arrangement as claimed in claim 2,
**characterized** in that the electromechanical transducer (14) is configured as an electromagnet (30) whose armature (31) is formed by the first valve body (12).

19. A valve arrangement as claimed in claim 5,
**characterized** in that means (32) are provided guaranteeing a predeterminable mean restricting function in the event of a failure of the electromechanical transducer (14).

20. A valve arrangement as claimed in claim 19,
**characterized** in that the first valve body (12) is prestressed by a second spring (32) which counteracts the spring (16).

21. A valve arrangement as claimed in claim 19 or claim 20,
**characterized** in that the hydraulic connection is closed by the force of the second spring (32), and further comprising a third hydraulic connection between the inlet (41) and the outlet (42) of the valve arrangement (11) which is simultaneously released by the first valve body (12).

22. A valve arrangement as claimed in claim 5,
**characterized** in that means are provided for safeguarding both a predeterminable mean restricting function and a predeterminable mean pressure-limiting function in the event of a failure of the electromechanical transducer (14).

23. A valve arrangement as claimed in claim 22,
**characterized** in that a third spring (33) acting on the first valve body (12) in contrast with the spring (16) is provided, the third spring partly closing the hydraulic connection, the electromagnetic transducer (14) being effective bidirectionally.

24. A valve arrangement as claimed in claim 23,
**characterized** in that a fourth spring (34) is supported at a force-transmitting element (37) which is actuatable by a third electromechanical transducer (36) and affords a transmission of the force of the fourth spring (34) to the first valve body (12) in the event of a switch-off or a failure of the third electromechanical transducer (36).

25. A valve arrangement as claimed in anyone of the preceding claims,
**characterized** in that means are provided which ensure a nonlinear dependence of the opening cross-section of the cross-sectional areas of flow (24) on the excursion of the first valve body (12).

26. A valve arrangement as claimed in claim 25,
**characterized** in that the front surface of the first valve body (12) includes notches.

27. A valve arrangement as claimed in claim 25,
**characterized** in that the first valve body (12) is furnished with bores in its range interacting with the cross-sectional areas of flow (24).

28. A valve arrangement as claimed in claim 25,
**characterized** in that the cross-sectional areas of flow (24) in the guide element (13) are configured in the shape of bores.

29. A valve arrangement as claimed in anyone of the preceding claims,
**characterized** in that filter elements precede the hydraulic connections.

30. A valve arrangement as claimed in claims 11 and 29,
**characterized** in that one filter element (38) is positioned in the guide element (13) before the cross-sectional areas of flow (24).

31. A valve arrangement as claimed in claim 1,
**characterized** in that the first valve body (12) is part of a travel sensor device (40) interacting with or coupled to a controller.

32. A valve arrangement as claimed in claim 1,
**characterized** in that the first valve body (12) is pilot-controlled.

## Revendications

1. Agencement de valve (11), pour amortisseur bitube réglable, qui est agencé de façon à pouvoir être commandé, cet agencement de valve comprenant un cylindre de travail (2), dont la cavité est divisée en une première (7) et une seconde (8) chambres de travail par un piston (6) mobile d'une manière coulissante, et une chambre d'équilibre (4) partiellement remplie d'huile, l'agencement de valve (11) comprenant un corps de vanne (12) équilibré en pression qui est agencé de façon à pouvoir être actionné au moyen d'un convertisseur électromécanique (14) et est soumis à une précontrainte au moyen d'un ressort (16) et qui influe sur une liaison hydraulique qui est traversée par un écoulement d'une manière unidirectionnelle et qui se présente, dans la phase de traction, entre la première chambre de travail (7) et, en commun, la seconde chambre de travail (8) et la chambre d'équilibre (4) et, dans la phase de poussée, entre, en commun, la première (7) et la seconde (8) chambres de travail et la chambre d'équilibre (4), caractérisé en ce que, dans un premier domaine de débits (A), le corps de vanne (12) remplit une fonction d'étranglement dépendant de la commande du convertisseur électromécanique (14) et coopère en même temps avec un second corps de vanne (15) non équilibré en pression qui, dans un second domaine de débits (B), influe sur une seconde liaison hydraulique qui est traversée par un écoulement d'une manière unidirectionnelle et qui se présente, dans la phase de traction, entre la première chambre de travail (7) et, en commun, la seconde chambre de travail (8) et la chambre d'équilibre (4) et, dans la phase de poussée, entre, en commun, la seconde (8) et la première (7) chambres de travail et la chambre d'équilibre (4), le second corps de vanne (15) remplissant une fonction de limitation de pression qui dépend aussi de la commande du convertisseur électromécanique (14).

2. Agencement de valve selon la revendication 1, caractérisé en ce que que le premier corps de vanne (12) est réalisé de façon à constituer une partie du convertisseur électromécanique (14).

3. Agencement de valve selon la revendication 1, caractérisé en ce que le second corps de vanne (15) est agencé de façon à pouvoir être actionné par un autre ou un second convertisseur électromécanique (35).

4. Agencement de valve selon la revendication 3, caractérisé en ce que que le second corps de vanne (15) est réalisé comme constituant d'une partie du second convertisseur électromécanique (35).

5. Agencement de valve selon la revendication 1, caractérisé en ce que le second corps de vanne (15) est soumis à l'action de la commande du convertisseur électromécanique (14) d'une manière indirecte par l'intermédiaire de la distance dont se déplace le premier corps de vanne (12).

6. Agencement de valve selon la revendication 1, caractérisé en ce que le premier corps de vanne (12) est accouplé, au moyen du ressort (16), au second corps de vanne (15) non équilibré en pression.

7. Agencement de valve selon la revendication 1, caractérisé en ce que dans le cas où le premier corps de vanne est réalisé sous forme d'un manchon qui est guidé d'une manière coulissante sur une partie de guidage fixe, caractérisé en ce que le manchon (12) coopère avec des sections de passage (24) qui sont réalisées dans la partie de guidage (13).

8. Agencement de valve selon la revendication 7, caractérisé en ce que les sections de passage (24) sont réalisées sous forme de fentes et de gorges annulaires.

9. Agencement de valve selon le préambule de la revendication 7, caractérisé en ce que la seconde liaison hydraulique est formée d'un premier perçage (17) réalisé dans la partie de guidage (13), d'une chambre cylindrique (19), servant à loger le second corps de vanne (15) et le ressort (16), et d'un second perçage (18) réalisé dans le manchon (12) suivant le même axe que le premier perçage (17).

10. Agencement de valve selon la revendication 9, caractérisé en ce que le second corps de vanne (15) est réalisé sous forme d'une sphère qui est soumise à une précontrainte par le ressort (16) et qui coopère avec un siège d'étanchéité (20) réalisé à une extrémité du premier perçage (17).

11. Agencement de valve selon la revendication 1, caractérisé en ce que la seconde liaison hydraulique est formée au moyen de sections de passage (43), par exemple de fentes ou de gorges annulaires, réalisées dans la partie de guidage (13), le second corps de vanne (15) étant réalisé sous forme d'un second manchon (21) qui est guidé d'une manière coulissante sur ou dans la partie de guidage (13) et qui coopère avec un siège d'étanchéité (22) réalisé sur ou dans la partie de guidage (13).

12. Agencement de valve selon la revendication 11, caractérisé en ce que le siège d'étanchéité (22) est formé au moyen d'un épaulement (23) de plus grand ou plus petit diamètre qui est réalisé sur ou dans la partie de guidage (13).

13. Agencement de valve selon la revendication 9 ou 10, caractérisé en ce que, lors de la coopération du manchon (12) et des sections de passage (24), il se produit une compensation des forces hydrauliques se présentant dans le domaine d'action.

14. Agencement de valve selon la revendication 13, caractérisé en ce que le manchon (12) et/ou la chambre (25) si tuée en aval des sections de passage (24) dans le sens d'écoulement sont réalisés d'une façon telle qu'un changement de direction du débit est assuré.

15. Agencement de valve selon la revendication 14, caractérisé en ce que la surface frontale (26) du manchon (12) qui coopère avec les sections de passage (24) est réalisée en forme de tronc de cône.

16. Agencement de valve selon la revendication 13, caractérisé en ce que les sections de passage (24) débouchent dans une chambre hydraulique annulaire (27) qui communique avec la sortie (42) de l'agencement de valve (11) d'une façon telle que la pression statique régnant dans la chambre annulaire (27) permet que soit active une composante de force hydraulique qui s'oppose aux forces de Bernoulli agissant sur le manchon (12).

17. Agencement de valve selon la revendication 2, caractérisé en ce que le convertisseur électromécanique (14) est réalisé sous la forme d'une bobine mobile (29) qui coopère avec un aimant permanent (28) et dont le porte-bobine est formé par le premier corps de vanne (12).

18. Agencement de valve selon la revendication 2, caractérisé en ce que le convertisseur électromécanique (14) est réalisé sous la forme d'un électro-aimant (30) dont l'armature mobile (31) est formée par le premier corps de vanne (12).

19. Agencement de valve selon la revendication 5, caractérisé en ce qu'il est prévu des moyens (32) qui, dans le cas d'une défaillance du convertisseur électromécanique (14), assurent une fonction d'étranglement intermédiaire pouvant être déterminée à l'avance.

20. Agencement de valve selon la revendication 19, caractérisé en ce que le premier corps de vanne (12) est soumis à une précontrainte au moyen d'un second ressort (32) qui s'oppose au ressort (16).

21. Agencement de valve selon la revendication 19 ou 20, caractérisé en ce que la liaison hydraulique est fermée grâce à la force du second ressort (32), tandis qu'entre l'entrée (41) et la sortie (42) de l'agencement de valve (11), il est prévu une troisième liaison hydraulique qui est libérée en même temps par le premier corps de vanne (12).

22. Agencement de valve selon la revendication 5, caractérisé en ce qu'il est prévu des moyens qui, dans le cas d'une défaillance du convertisseur électromécanique (14), assurent aussi bien une fonction d'étranglement intermédiaire pouvant être déterminée à l'avance qu'une fonction de limitation de pression intermédiaire pouvant être déterminée à l'avance.

23. Agencement de valve selon la revendication 22, caractérisé en ce que la liaison hydraulique est fermée partiellement au moyen d'un troisième ressort (33) agissant sur le premier corps de vanne (12) dans un sens opposé au ressort (16), le convertisseur électromagnétique (14) étant actif d'une manière bidirectionnelle.

24. Agencement de valve selon la revendication 23, caractérisé en ce qu'un quatrième ressort (34) prend appui sur un élément de transmission de force (37) qui est agencé de façon à pouvoir être actionné au moyen d'un troisième convertisseur électromécanique (36) et qui permet une transmission de la force du quatrième ressort (34) au premier corps de vanne (12) lors d'une mise à l'arrêt ou d'une défaillance du troisième convertisseur électromécanique (36).

25. Agencement de valve selon l'une des revendications précédentes, caractérisé en ce qu'il est prévu des moyens qui assurent une dépendance non linéaire de l'aire d'ouverture des sections de passage (24) vis-à-vis de la distance dont se déplace le premier corps de vanne (12).

26. Agencement de valve selon la revendication 25, caractérisé en ce que la surface frontale du premier corps de vanne (12) comporte des parties entaillées.

27. Agencement de valve selon la revendication 25, caractérisé en ce que le premier corps de vanne (12) comporte des perçages dans sa zone coopérant avec les sections de passage (24).

28. Agencement de valve selon la revendication 25, caractérisé en ce que les sections de passage (24) prévues dans la partie de guidage (13) sont réalisées sous forme de perçages.

29. Agencement de valve selon l'une des revendications précédentes, caractérisé en ce que des éléments de filtre sont disposés en amont des liaisons hydrauliques.

30. Agencement de valve selon les revendications 11 et 29, caractérisé en ce qu'un élément de filtre (38) est disposé dans la partie de guidage (13) en amont des sections de passage (24).

31. Agencement de valve selon la revendication 1, caractérisé en ce que le premier corps de vanne (12) constitue une partie d'un dispositif capteur de course (40) coopérant avec un régulateur ou est accouplé à un tel dispositif.

32. Agencement de valve selon la revendication 1, caractérisé en ce que le premier corps de vanne (12) est piloté.
